# EUROPEAN PATENT APPLICATION

(11) **EP 1 860 720 A1**
(43) Date of publication of application: **28.11.2007**
(21) Application number: 07009845.4
(22) Date of filing: 16.05.2007
(51) Int. Cl.: H01M 8/06, H01M 8/04

(54) **Fuel cell system with unreacted anode gas treatment and discharge facilities**

(30) Priority: 23.05.2006 CN 200610080959
(71) Applicant: Asia Pacific Fuel Cell Technologies, Ltd., Chunan, Miaoli 350 (TW)
(72) Inventor: Yang, Jefferson YS, Orange, CA 92869 (US); Hsiao, Feng-Hsiang, Taipei 110 (TW)
(74) Representative: Goddar, Heinz J.

(57) **Abstract**

A fuel cell system with unreacted anode gas treatment and discharge facilities includes a fuel cell stack and an unreacted anode gas discharge pipeline connected at an end to a hydrogen outlet port of the fuel cell stack. Urweacted anode gas discharged via the hydrogen outlet port is led by the unreacted anode gas discharge pipeline to a catalytic converter or to a cathode catalytic bed of the fuel cell stack via an oxygen inlet port thereof, so that the unreacted anode gas reacts with oxygen at the catalytic converter or the cathode catalytic bed to produce reaction product, which is then discharged.

## Description

### FIELD OF THE INVENTION

The present invention relates to a fuel cell system, and more particularly, to a fuel cell system with unreacted anode gas treatment and discharge facilities.

### BACKGROUND OF THE INVENTION

The consumption of conventional energy sources, such as coal, petroleum, and natural gas, is constantly increased with the highly developed human civilization, resulting in serious environmental pollution on earth and worsened environment deterioration factors, such as greenhouse effect and acid rain. In view of the limited and gradually depleted natural energy sources, many highly developed countries have devoted to the development of new and alternative energy sources. Among others, fuel cell stack is a very important, highly potential and practical choice. As compared with the conventional internal combustion engine, the fuel cell stack has many advantages, including high energy conversion efficiency, clean exhaust, low noise, completely fuel-oil-free, etc.

A fuel cell stack includes a plurality of fuel cell units. Each fuel cell unit is a power-generating unit that generates electrical energy through electrochemical reaction of anode reactant gas with cathode reactant gas. The fuel cell stack basically involves a reverse electrolysis reaction, in which chemical energy is converted into electric energy.

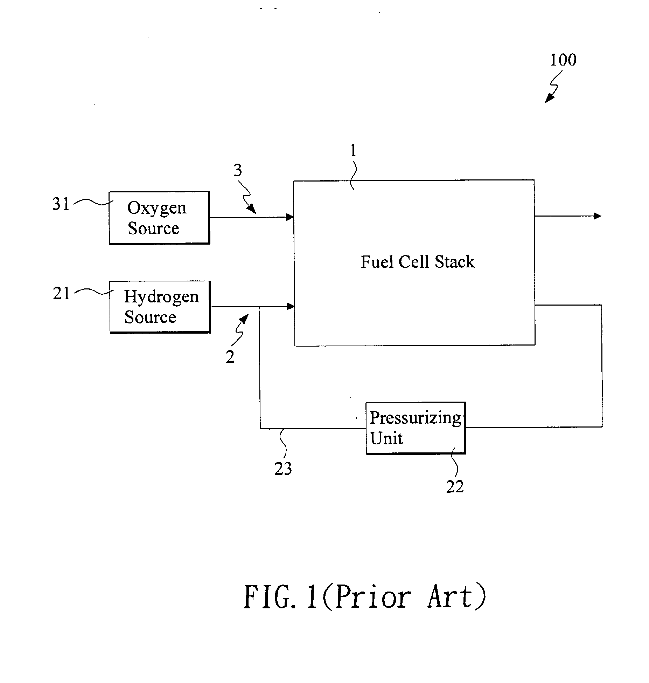

**Fig. 1** is a block diagram of a conventional fuel cell system **100,** which includes a fuel cell stack **1,** a hydrogen pipeline **2,** and an oxygen pipeline **3.** The hydrogen pipeline **2** includes a hydrogen source **21** for supplying highly pure hydrogen to the fuel cell stack **1,** a pressurizing unit **22,** and a hydrogen recycling pipeline **23.** The oxygen pipeline **3** includes an oxygen source **31** for supplying oxygen to the fuel cell stack **1.**

The hydrogen and the oxygen are respectively supplied from the hydrogen source **21** and the oxygen source **31** into the fuel cell stack **1,** so that chemical reaction between the hydrogen and the oxygen occurs in the fuel cell stack **1** to produce heat energy, electric energy, and reaction products. Hydrogen and oxygen that are not used or reacted in the reaction are separately discharged. More specifically, the unreacted oxygen (unreacted cathode gas) is directly discharged into ambient air, while the unreacted hydrogen (unreacted anode gas) is pressurized by the pressurizing unit **22** and then led through the hydrogen recycling pipeline **23** to a hydrogen inlet port of the fuel cell stack **1** for reuse.

The discharged and recycled unreacted hydrogen tends to contain impurities. When the recycled hydrogen is mixed with the highly pure hydrogen supplied from the hydrogen source **21,** the mixed hydrogen gas would have the problem of reduced purity or toxic property, and would adversely affect the overall performance and efficiency of the fuel cell stack **1** when being guided into the fuel cell stack **1.**

On the other hand, the unreacted hydrogen cannot be directly discharged into ambient air via a hydrogen outlet port of the fuel cell stack, because hydrogen in ambient air having a local concentration exceeded 4% tends to result in explosion and self combustion. It is therefore an important issue to solve the problem of unreacted gas in the hydrogen pipeline of the fuel cell system.

### SUMMARY OF THE INVENTION

A primary object of the present invention is to provide a fuel cell system with unreacted anode gas treatment and discharge facilities, which includes an unreacted anode gas discharge pipeline, so that unreacted anode gas may be discharged at a starting phase of the fuel cell system or at predetermined intervals during operation of the fuel cell system, and led via the unreacted anode gas discharge pipeline to react with oxygen in a combustion reaction.

Another object of the present invention is to provide a fuel cell system that recycles part of unreacted hydrogen. For this purpose, a part of unreacted hydrogen is guided to react with oxygen for combustion reaction, and the other part of the unreacted hydrogen is led to the fuel cell stack to mix with highly pure hydrogen supplied from a hydrogen source and then be recycled.

A further object of the present invention is to provide unreacted anode gas treatment and discharge facilities for associating with a cathode catalytic bed in a fuel cell stack, so that part of unreacted anode gas is guided to the cathode catalytic bed of the fuel cell stack to react with oxygen before being discharged.

To fulfill the above objects, a fuel cell system with unreacted anode gas treatment and discharge facilities is provided. The fuel cell system comprises a fuel cell stack and an unreacted anode gas discharge pipeline connected at an end to a hydrogen outlet port of the fuel cell stack. Unreacted anode gas discharged via the hydrogen outlet port is led by the unreacted anode gas discharge pipeline to a catalytic converter or to a cathode catalytic bed of the fuel cell stack via an oxygen inlet port thereof, so that the unreacted anode gas reacts with oxygen at the catalytic converter or the cathode catalytic bed to produce reaction product, which is then discharged.

The fuel cell system with unreacted anode gas treatment and discharge facilities according to the present invention is superior to the fuel cell systems of prior art because it only recycles part of the unreacted anode gas to increase the purity of hydrogen input to the fuel cell stack, and enables the other part of the unreacted anode gas to react with oxygen in the combustion reaction to effectively solve the problem of storing and discharging unused hydrogen.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:

**Fig. 1** is a block diagram of a conventional fuel cell system;

**Fig. 2** is a block diagram of a fuel cell system according to a first embodiment of the present invention;

**Fig. 3** is a schematic view of a gas mixing chamber included in the fuel cell system according to the first embodiment of the present invention;

**Fig. 4** is a block diagram of a fuel cell system according to a second embodiment of the present invention; and

**Fig. 5** is a schematic view showing the unreacted anode gas reacts with oxygen at a cathode catalytic bed in the fuel cell stack according to the second embodiment of the present invention.

### DETAILED DESCRIPTION OF THE PREFERRED EMBODIMENTS

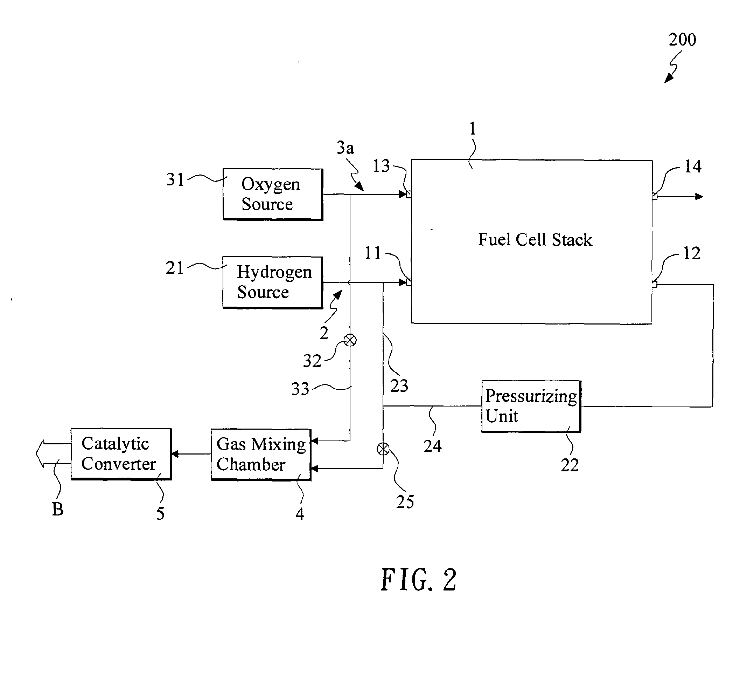

Please refer to **Fig. 2** that is a block diagram of a fuel cell system **200** according to a first embodiment of the present invention. As shown, the fuel cell system **200** includes a fuel cell stack **1,** a hydrogen pipeline **2a,** an oxygen pipeline **3a,** a gas mixing chamber **4,** and a catalytic converter **5.**

The fuel cell system **200** is different from the conventional fuel cell system **100** in that, in addition to a hydrogen source **21,** a pressurizing unit **22,** and a hydrogen recycling pipeline **23,** the hydrogen pipeline **2a** further includes an unreacted anode gas discharge pipeline **24** and a valve unit **25.**

Hydrogen supplied from the hydrogen source **21** is guided into the fuel cell stack **1** via a hydrogen inlet port **11;** and hydrogen or anode gas that is not used in the reaction is discharged from the fuel cell stack **1** via a hydrogen outlet port **12.** The discharged unreacted anode gas is pressurized by the pressurizing unit **22.** A part of the pressurized unreacted anode gas is led by the hydrogen recycling pipeline **23** to the hydrogen inlet port **11** again, while the other part of the pressurized unreacted anode gas is led through the unreacted anode gas discharge pipeline **24** under control of the valve unit **25** into the gas mixing chamber **4.**

The fuel cell system **200** according to the first embodiment of the present invention is different from the conventional fuel cell system **100** also in that the oxygen pipeline **3a** further includes a valve unit **32** and an oxygen branch line **33.** A part of oxygen supplied from the oxygen source **31** is guided into the fuel cell stack **1** via an oxygen inlet port **13;** and oxygen that is not used in the reaction is discharged via an oxygen outlet port **14** into ambient air. The other part of the oxygen supplied from the oxygen source **31** is led through the oxygen branch line **33** under control of the valve unit **32** into the gas mixing chamber **4.**

In the gas mixing chamber **4,** hydrogen and oxygen are fully mixed, and the gas mixture is further led to the catalytic converter **5,** at where a chemical reaction occurs to produce reaction product **B,** which is then discharged from the catalytic converter **5** to external environment.

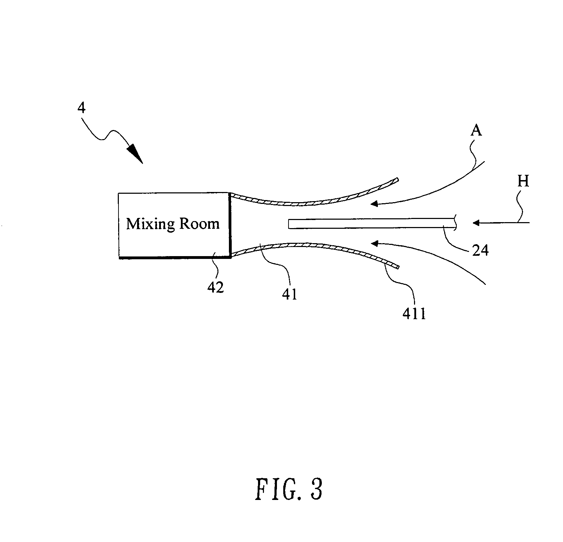

The gas mixing chamber **4** adopted in the fuel cell system **200** according to the first embodiment of the present invention is provided with proper connecting ports, to which the unreacted anode gas discharge pipeline **24** and the oxygen branch line **33** are connected so as to lead unreacted anode gas and oxygen into the gas mixing chamber **4.** Alternatively, the gas mixing chamber **4** may be configured as shown in **Fig. 3.**

Please refer to **Fig. 3** which is a schematic view of a gas mixing chamber included in the fuel cell system according to the first embodiment. The gas mixing chamber **4** includes a nozzle **41** and a mixing room **42.** The nozzle **41** communicates with the mixing room **42** and the unreacted anode gas discharge pipeline **24,** so that the unreacted anode gas **H** is guided via the unreacted anode gas discharge pipeline **24** into the gas mixing chamber **4.** Meanwhile, oxygen **A** is guided via a flared opening **411** of the nozzle **41** into the gas mixing chamber **4.**

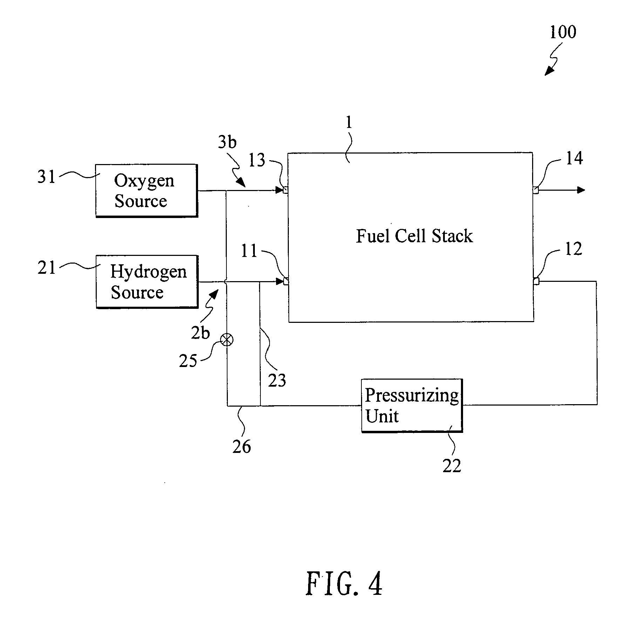

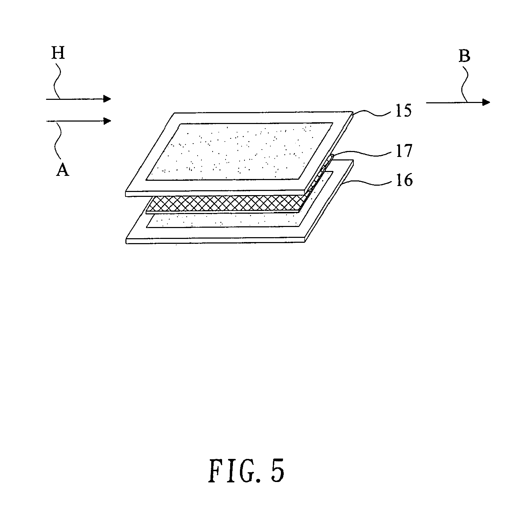

Please refer to **Fig. 4** that is a block diagram of a fuel cell system **300** according to a second embodiment of the present invention. As shown, the fuel cell system **300** includes a fuel cell stack **1,** a hydrogen pipeline **2b,** and an oxygen pipeline **3b.** Please refer to **Fig. 5. Fig. 5** is a schematic view showing the unreacted anode gas reacts with oxygen at a cathode catalytic bed in the fuel cell stack according to the second embodiment. The fuel cell stack **1** in the fuel cell system **300** of the second embodiment includes a cathode catalytic bed **15,** an anode catalytic bed **16,** and a proton exchange membrane **17.**

The fuel cell system **300** is different from the conventional fuel cell system **100** in that, in addition to the hydrogen source **21,** the pressurizing unit **22,** and the hydrogen recycling pipeline **23,** the hydrogen pipeline **2b** further includes a valve unit **25** and an unreacted anode gas discharge pipeline **26.**

The fuel cell system **300** functions differently from the conventional fuel cell system **100** in that unreacted anode gas **H** discharged via the hydrogen outlet port **12** is pressurized by the pressurizing unit **22.** A part of the pressurized unreacted anode gas **H** is led through the unreacted anode gas discharge pipeline **26** under control of the valve unit **25** to the oxygen inlet port **13** of the fuel cell stack **1,** and then to the cathode catalytic bed **15** of the fuel cell stack **1.** The unreacted anode gas **H** led to the fuel cell stack **1** and oxygen A supplied from the oxygen source **31** to the fuel cell stack **1** via the oxygen inlet port **13** conduct a combustion reaction at the cathode catalytic bed **15** to produce reaction product **B,** which is then discharged via the oxygen outlet port **14.**

In the illustrated embodiments of the present invention, the oxygen source and the hydrogen source are provided mainly to supply oxygen and hydrogen needed by the fuel cell stack. Any other known types of oxygen and hydrogen sources providing equivalent function and effect may also be employed in the present invention. For example, the oxygen source may be ambient air and a cooperative blower, or a high-pressure oxygen cylinder or tank; and the hydrogen source may be a high-pressure hydrogen cylinder or tank, or a hydrogen storage alloy.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A fuel cell system, comprising:
a fuel cell stack, which including:
a hydrogen inlet port for guiding a hydrogen supplied from a hydrogen source into the fuel cell stack;
a hydrogen outlet port for discharging an unreacted hydrogen;
an oxygen inlet port for guiding an oxygen supplied from an oxygen source into the fuel cell stack; and
an oxygen outlet port for discharging an unreacted oxygen;
a catalytic converter;
an oxygen branch line extended between and connected to the oxygen source and the catalytic converter, so as to lead the oxygen to the catalytic converter; and
an unreacted anode gas discharge pipeline extended between and connected to the hydrogen outlet port of the fuel cell stack and the catalytic converter for leading the unreacted hydrogen to the catalytic converter;
wherein the unreacted hydrogen and the oxygen led to the catalytic converter react with each other to produce a reaction product, which is then discharged from the catalytic converter.

2. The fuel cell system as claimed in claim 1, further comprising a hydrogen recycling pipeline extended between and connected to the unreacted hydrogen discharge pipeline and the hydrogen inlet port of the fuel cell stack for leading the unreacted hydrogen discharged from the hydrogen outlet port of the fuel cell stack to the hydrogen inlet port.

3. The fuel cell system as claimed in claim 1, wherein the hydrogen source is selected from the group consisting of hydrogen storage alloys and a hydrogen cylinder/tank.

4. The fuel cell system as claimed in claim 1, wherein the oxygen source is selected from the group consisting of an oxygen cylinder/tank and an air blower.

5. The fuel cell system as claimed in claim 1, further comprising a gas mixing chamber communicably connected to the catalytic converter, the unreacted hydrogen discharge pipeline, and the oxygen branch line.

6. The fuel cell system as claimed in claim 5, wherein the gas mixing chamber further comprises a nozzle for connecting the gas mixing chamber to the unreacted hydrogen discharge pipeline and the oxygen branch line.

7. The fuel cell system as claimed in claim 1, further comprising a valve unit connected to the unreacted hydrogen discharge pipeline.

8. The fuel cell system as claimed in claim 1, further comprising a valve unit connected to the oxygen branch line.

9. The fuel cell system as claimed in claim 1, further comprising a pressurizing unit connected to the unreacted hydrogen discharge pipeline.

10. The fuel cell system as claimed in claim 1, wherein the unreacted oxygen is directly discharged into ambient air.

11. A fuel cell system, comprising:
a fuel cell stack, which including:
a cathode catalytic bed;
a hydrogen inlet port for guiding a hydrogen supplied from a hydrogen source into the fuel cell stack;
a hydrogen outlet port for discharging an unreacted hydrogen;
an oxygen inlet port for guiding an oxygen supplied from an oxygen source into the cathode catalytic bed; and
an oxygen outlet port for discharging an unreacted oxygen; and
an unreacted hydrogen discharge pipeline extended between and connected to the hydrogen outlet port and the oxygen inlet port of the fuel cell stack for leading the unreacted hydrogen to the cathode catalytic bed of the fuel cell stack;
wherein the unreacted hydrogen and the oxygen led to the cathode catalytic bed react with each other to produce a reaction product, which is then discharged from the oxygen outlet port.

12. The fuel cell system as claimed in claim 11, further comprising a hydrogen recycling pipeline extended between and connected to the unreacted hydrogen discharge pipeline and the hydrogen inlet port of the fuel cell stack for leading the unreacted hydrogen discharged from the hydrogen outlet port of the fuel cell stack to the hydrogen inlet port.

13. The fuel cell system as claimed in claim 11, wherein the hydrogen source is selected from the group consisting of hydrogen storage alloys and a hydrogen cylinder/tank.

14. The fuel cell system as claimed in claim 11, wherein the oxygen source is selected from the group consisting of an oxygen cylinder/tank and an air blower.

15. The fuel cell system as claimed in claim 11, further comprising a valve unit connected to the unreacted hydrogen discharge pipeline.

16. The fuel cell system as claimed in claim 11, further comprising a pressurizing unit connected to the unreacted hydrogen discharge pipeline.

17. The fuel cell system as claimed in claim 11, wherein the unreacted oxygen is directly discharged into ambient air.
